# EUROPÄISCHE PATENTANMELDUNG

(11) **EP 1 217 837 A2**
(43) Veröffentlichungstag der Anmeldung: **26.06.2002**
(21) Anmeldenummer: 01122118.1
(22) Anmeldetag: 14.09.2001
(51) Int. Cl.: H04N 7/24

(54) **System zur Datenübertragung zwischen lokalen Datennetzen**

(30) Priorität: 23.11.2000 DE 10057997
(71) Anmelder: Rohde & Schwarz FTK GmbH, 12557 Berlin (DE)
(72) Erfinder: Jäkel, Torsten, 12683 Berlin (DE)
(74) Vertreter: Körfer, Thomas, Dipl.-Phys.

(57) **Zusammenfassung**

Die Erfindung betrifft ein System zur Übertragung von Daten zwischen lokalen Datennetzen (LAN). Die lokalen Datennetze (LAN) sind über ein bereits bestehendes digitales Video-Verteilnetz (STL) miteinander verbunden und für die Datenübertragung wird die freie Übertragungskapazität des digitalen Video-Verteilnetzes benutzt.

## Beschreibung

Die Erfindung betrifft ein System zur Übertragung von Daten zwischen lokalen Datennetzen.

In der modernen Datenverarbeitungstechnik ist es oftmals erforderlich, die Daten zwischen verschiedenen örtlich getrennten lokalen Datennetzen (LAN) auszutauschen. Dazu werden bisher meist spezielle Telekommunikationsverbindungen benutzt, die nach den inzwischen gebräuchlichen Internetprotokollen (IP) den Datenaustausch beispielsweise zwischen den Rechnern verschiedener lokaler Netze ermöglichen.

Solche separaten Verbindungen sind insbesondere bei der Weitverkehrs-Datenkommunikation zwischen LAN sehr aufwendig und teuer.

Es ist daher Aufgabe der Erfindung, ein System zur Datenübertragung zwischen LANs zu schaffen, das sehr einfach und kostengünstig realisiert werden kann.

Diese Aufgabe wird erfindungsgemäß gelöst durch ein System laut Hauptanspruch. Vorteilhafte Weiterbildungen ergeben sich aus den Unteransprüchen.

Mit dem Übergang auf digitale Videotechnik werden in jüngster Zeit spezielle Netzwerke für die Zuspielung und Verteilung von digitalen Videodaten errichtet und betrieben. Dabei werden sogenannte MPEG-2-Transport-Ströme (MPEG-2-TS) auf in der Regel unidirektionale Leitungsverbindungen verteilt und nach dem MPEG-2-Standard aufbereitet an weitere System übertragen. Diese sogenannten Studio-Transmitter-Links (STL) werden momentan weltweit errichtet und basieren auf den inzwischen eingeführten digitalen Video-Rundfunk-Standards DVB, APSC bzw. SMPDE. Diese MPEG-2-Transportströme auf den STLs enthalten Programme aus komprimierten Video- und Audio-Daten und meist noch zusätzliche Daten, die normalerweise als Zusatz zu den Programmen gedacht sind und ebenfalls ausgesendet an den Fernsehteilnehmer weitergeleitet werden. Die Erfindung macht sich die Erkenntnis zu Nutze, daß diese STLs eine leistungsfähige Infrastruktur für die Verteilung komplexer digitaler Datenströme darstellen und daher die freien Übertragungskapazitäten dieser STLs auch für die Übertragung von Daten zwischen lokalen Datennetzen (LAN) benutzt werden können. Damit werden separate Verbindungen überflüssig und die verschiedenen Standorte solcher LANs können sowohl im Weitverkehr als auch im Inhausbereich (beispielsweise intern in Studios) über diese bereits vorhandenen Video-Verteilnetze miteinander vernetzt werden. Über Inband-IP-Verbindungen können alle Systemkomponenten der so miteinander verbundenen LANs erreicht werden. Die über das Video-Verteilnetz zur Verfügung gestellten hochwertigen IP-Verbindungen gewährleisten eine gesicherte Qualität der Datenübertragung bei hoher Netzzuverlässigkeit und bieten auch die für eine solche Datenübertragung erforderliche hohe Bandbreite. Sie können auch als sogenannte Backup-LAN-Verbindungen bei Ausfall von Standard-Telekommunikationswegen benutzt werden. Auch eine Nutzung als sogenannte Voice-Over-IP-Implementierung bei Telefonie-Netzen für Service-Zwecke oder Corporate Communication ist möglich.

Die Erfindung wird im folgenden anhand schematischer Zeichnungen an Ausführungsbeispielen näher erläutert:

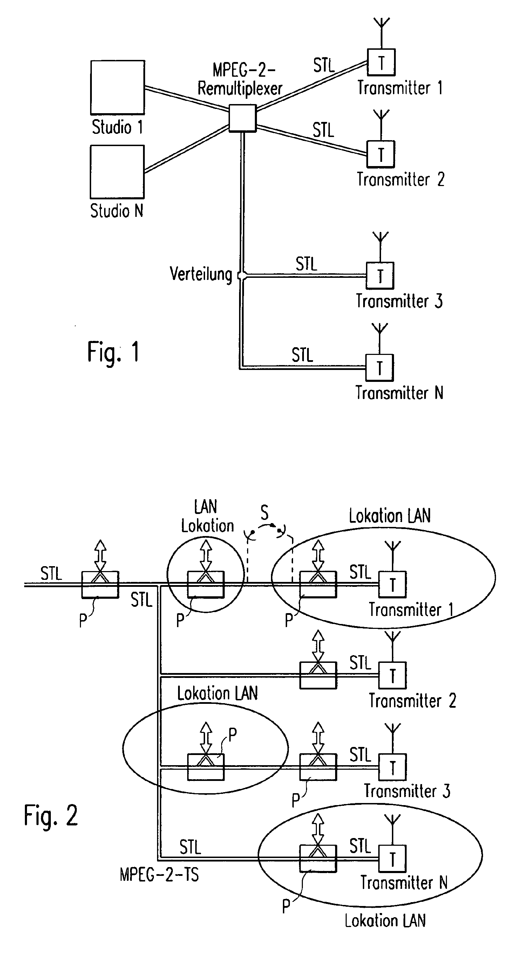

Fig. 1 zeigt ein übliches unidirektionales digitales Video-Verteilnetz, mit dem über' MPEG-2-Multiplexer, Router, Verteiler und Vervielfacher in einem großen Flächenbereich die digitalen Daten von Studios über Transmitter-Links STL zu terrestrischen DVB-Sendern T übertragen werden. Da beim digitalen Video-Rundfunk DVB eine Vielzahl von Sendern verteilt über ein großes Sendergebiet erforderlich ist, umspannt ein solches Video-Verteilnetz auf MPEG-2-Basis (nach DVB- bzw. ATSC-Standard) eine räumlich große Fläche. Über die miteinander vernetzten Studio-Transmitter-Links STL werden die MPEG-2-Transport-Ströme (MPEG-2-TS) übertragen und auf die Sender T verteilt. Diese bisher ausschließlich zur Übertragung von digitalen Videoprogrammen benutzte Infrastruktur besitzt meist eine große Menge von freier Übertragungskapazität. Die gesamte Verteilstruktur verfügt über eine Übertragungsrate von beispielsweise 270 Mbit/s, wovon maximal ca. 200 Mbit/s ausnutzbar sind. Davon wird jedoch höchstens ein Bruchteil für die Video-Übertragung benötigt.

Diese freie Übertragungskapazität wird nun für die Übertragung von zusätzlichen Daten zwischen lokalen Datennetzen ausgenutzt. Dazu ist es nur erforderlich, in das vorhandene unidirektionale Video-Verteilnetz im Sinne der Fig. 2 sogenannte Data Access Points P zu integrieren und über diese die Datenkommunikation zwischen lokalen Datennetzen LAN verschiedener Standorte herzustellen. Damit können dann beispielsweise Rechner, die in solchen voneinander abgesetzten lokalen Datennetzen LAN angeschlossen sind, miteinander Daten austauschen und separate Telekommunikationsdienstleistungen von Netzwerk-Providern, wie sie bisher hierfür angeboten werden, sind überflüssig. Über diese Data Access Points P wird der MPEG-2-Transport-Strom auf den STLs ohne Beeinflussung des eigentlichen dort übertragenen TV-Programms geleitet. Diese Data Access Points P sind jedoch in der Lage, freie Ressourcen in diesen über sie übertragenen Transport-Strömen für die zusätzliche Datenübertragung der LANs auszunutzen, beispielsweise über die in diesem Transportströmen übertragenen Nullpakete oder Stuffing-Bytes. Die Menge dieser freien Übertragungskapazitäten kann beispielsweise durch Messen festgestellt werden. Über die Data Access Points P werden die zwischen den LANs zu übertragenden Daten ein- und ausgekoppelt, sie sind geeignet, IP-basierte Daten von einer lokalen Schnittstelle der LANs entgegenzunehmen oder an diese abzugeben. Ferner sind in den Data Access Points P Einrichtungen für die Wegewahl zwischen den miteinander zu kommunizierenden LANs (routing) vorgesehen, die in bekannter Weise wie bei solchen Netzwerken üblich arbeiten. Außerdem sind Einrichtungen vorgesehen um die notwendige Bandbreite für die zusätzliche Datenübertragung zu reservieren und Bereitzustellen (quality of service). Diese Data Access Points P können an beliebiger Stelle des Video-Verteilnetzes in beliebiger Anzahl eingefügt werden, wie dies Fig. 2 zeigt. Sie sind so ausgestaltet, daß sie eine geringe konstante Verzögerungszeit, minimalen Jitter (Verzögerungsschwankungen) und Kompatibilität mit Standards und Schnittstellen aufweisen. Damit wird sichergestellt, daß die Videoprogramme ohne Qualtitätseinbußen wie bisher unbeeinflußt verteilt werden können. Die Data Access Points P beeinflussen auch nicht die Funktionen anderer im System eingesetzter Komponenten wie MPEG-2-Multiplexer, DVB-Router, Schalter und dergleichen.

Gemäß der Erfindung können mindestens lokale Datennetze mit 10 Mbit/s (10 BaseT) ohne Einschränkungen verkoppelt werden. Auch höhere Bandbreiten bis 50 Mbit/s und mehr sind denkbar. Dies hängt von den übertragenen Videoprogrammen ab, in der Regel werden 80 Mbit/s für die Übertragung der Programme nicht überschritten, so daß eine genügende Kapazitätsreserve besteht, um auch Fast-Ethernet-Netze mit 100 BaseT zu verkoppeln.

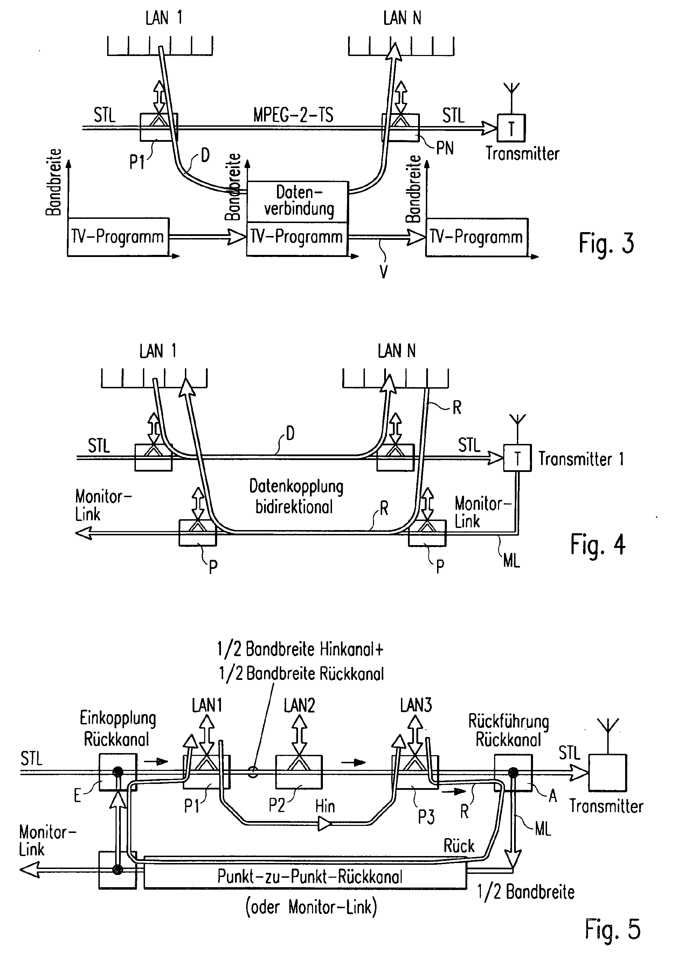

Fig. 3 zeigt im Detail vergrößert die Verknüpfung von zwei lokalen Datennetzen LAN1 und LANN über eine solche unidirektionale STL unter Benutzung von zwei Data Access Points P1 und PN, die an der Lokation LAN1 bzw. LANN2 in die STL integriert sind. Der MPEG-2-Transport-Strom V des Video-Signals wird über die Data Access Points P1 und PN unverändert zum Transmitter T übertragen, die Daten des LAN1 werden als zusätzlicher Datenstrom D von LAN1 zu LANN übertragen und dort wieder ausgekoppelt, so daß sie nicht zu Sender T gelangen können.

Für eine echte Datenkommunikation zwischen LANs ist eine bidirektionale Verbindung erforderlich. Das digitale Video-Verteilnetz STL ist aber nur unidirektional. Für den Rückweg muß daher ein zusätzlicher Kanal bereitgestellt werden.

Dafür ist beispielsweise die zur Verbindung solcher LANs bisher übliche Telekommunikationsverbindung geeignet oder jeder andere zur Verfügung stehende Rückkanal. Dieser muß nicht zwingend die gleiche Bandbreite gewährleisten wie der Vorwärtskanal über die STL.

Bei solchen digitalen Video-Verteilnetzen existieren neben der unidirektionalen Datenverbindung STL oftmals noch sogenannte Monitor-Links ML zwischen den Sendern T und den Studios, mittels denen ein abgestrahltes Video-Signal vom Sender T zurück an die zentrale Ausspiel-Station (Play-Out-Sender oder Studio) übertragen wird. Als Rückkanal für die LANs kann gemäß Fig. 4 ein solcher Monitor-Link ML benutzt werden, der zwar meist eine geringere Bandbreite aufweist aber im allgemeinen identisch ist mit den breitbandigen Datenverbindungen STL. Diese Monitor-Links verfügen meist mindestens über eine genau so große freie Übertragungskapazität wie die STLs, meist sogar noch eine größere. Für den Rückkanal werden gemäß Fig. 4 in die Monitor-Link ML wieder entsprechende Data Access Points P integriert, über die dann in Rückwärtsrichtung die Daten R von dem LANN zum LAN1 rückübertragen werden können, so daß insgesamt ein bidirektionaler Datenaustausch der Datenströme D und R über das Video-Verteilnetz möglich ist.

Fig. 5 zeigt eine andere Möglichkeit für die Realisierung eines bidirektionalen Verbindungsnetzes zwischen den LANs. In Fig. 5 sind längs der STL mehrere in Kette hintereinander angeordnete Data Access Points P1, P2, P3 angeordnet, die jeweils mit gesonderten lokalen Datennetzen LAN1, LAN2 bzw. LAN3 verbunden sind. Nach dem letzten Data Access Point P3 der Kette ist ein gesonderter Rückkanal ML vorgesehen, der zum logisch ersten Data Access Point P1 der Kette zurückführt. Die rückzuführenden Daten R beispielsweise des letzten Data Access Points P3 werden einer Auskoppelstelle A der unidirektionalen STL zugeführt, von dort über einen Punkt-zu-Punkt-Rückkanal ML zur einer Einkoppelstelle E vor der Kette der Data Access Points zurückgeführt und von dort wieder dem ersten Data Access Point P1 in Vorwärtsrichtung zugeführt. Damit ist ein bidirektionaler Datenaustausch zwischen den zugehörigen LAN1 und LAN3 möglich, wobei allerdings jeweils nur die zur Verfügung stehende halbe freie Bandbreite der STL für den Hinkanal und die halbe freie Bandbreite für den Rückkanal ausgenutzt werden kann. Entsprechende Routing-Protokolle stellen sicher, daß jeweils der richtige Empfänger in Abhängigkeit von der Richtung adressiert wird.

Die verwendbaren freien Bandbreiten (Übertragungskapazitäten) können zwischen verschiedenen Abschnitten des Video-Verteilnetzes unterschiedlich sein, durch die Zuweisung garantierter Bandbreiten ist sogar eine Wechselwirkungsfreiheit verschiedener logischer Kommunikationspfade möglich (quality of service).

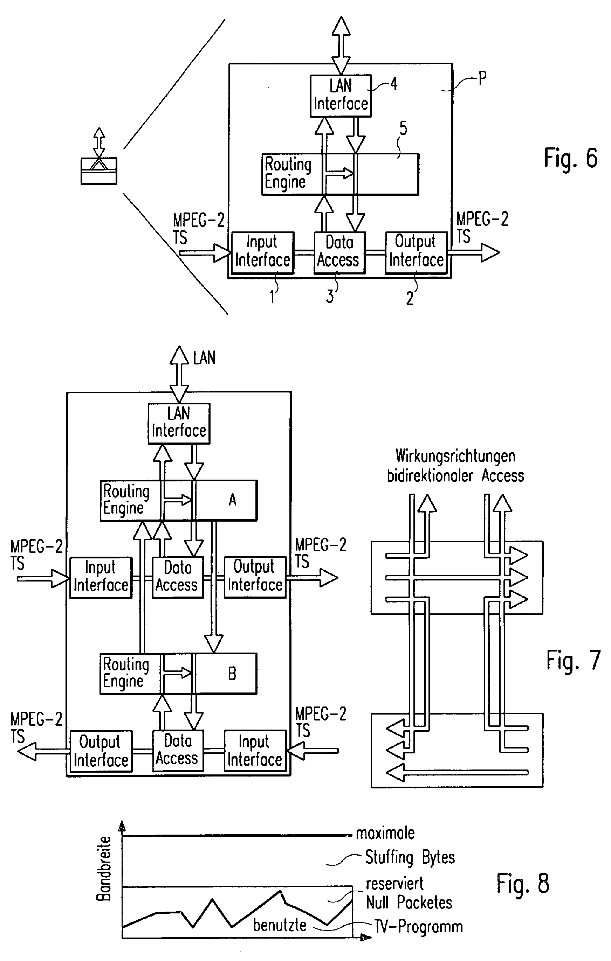

Fig. 6 zeigt den Prinzipaufbau eines Data Access Points P für unidirektionalen Betrieb. Die MPEG-2-Transport-Ströme (beispielsweise nach DVB-ASI-Standard) des STLs werden über Ein- und Ausangs-Interfaces 1 und 2 ein- und ausgekoppelt, dazwischen ist eine Einrichtung 3 für das Einfügen bzw. Auskoppeln von LAN-Daten angeordnet. Das lokale Datennetz LAN ist über ein entsprechendes LAN-Interface 4 angeschlossen. Dazwischen ist eine Einrichtung 5 für die Wegesteuerung (Routing) vorgesehen, die bestimmt, an welcher Stelle und an welchem Data Access Point der STL wieder ausgekoppelt werden muß, um die zu übertragenden Daten an das zugehörige LAN zu übergeben. Diese Routing-Funktion erfolgt in bekannter Weise wie dies bei solchen Netzen inzwischen Standard ist.

Fig. 7 zeigt eine entsprechende Einrichtung für einen bidirektionalen Data Access Point, hier sind die entsprechenden Komponenten 1 bis 5 gemäß Fig. 6 jeweils doppelt vorhanden, die Wegesteuerungen 5 sind jeweils miteinander verkoppelt. Mit einem solchen Data Access Point gemäß Fig. 7 können sehr vielfältige Wege auf einem bidirektionale Video-Verteilnetz aufgebaut und gesteuert werden.

Solche Video-Verteilnetze benutzen oftmals auch Satelliten-Verbindungen, Telekommunikationsnetze wie ATM und andere Verbindungen. Auch diese Verbindungsarten können zwischen den Data Access Points für den erfindungsgemäßen Zweck benutzt werden, um beispielsweise weit entfernte Standorte von LANs miteinander zu verknüpfen, wie dies mit einer Satelliten-Strecke 5 in Fig. 2 gestrichelt angedeutet ist.

Fig. 8 zeigt schematisch die bei einem solchen Übertragungssystem vorhandenen freien Übertragungskapazitäten, die für den erfindungsgemäßen Zweck ausgenutzt werden können. Gemäß Fig. 8 sind beispielsweise die sogenannten freien Pakete (Null-Pakets) innerhalb des Transportstromes geeignet. Auch die sogenannten Stuffing-Bytes, die zum Auffüllen bis zur maximalen physikalischen Byte-Rate vorhanden sind (bei DVB-ASI beispielsweise die Komma-Charakters), können für den erfindungsgemäßen Zweck ausgenutzt werden. Außerdem können reservierte Programmkanäle, über die im Moment keine Daten übertragen werden und deren Daten überschreibbar sind, für den erfindungsgemäßen Zweck ausgenutzt werden. Das erfindungsgemäße Prinzip ist nicht nur für DVB-ASI-Verbindungen geeignet, sondern auch für alle anderen Video-Verteiltechniken, beispielsweise SDTI, die freie Übertragungskapazitäten aufweisen. Bei all diesen Video-Verteilnetzen können gemäß der Erfindung darüberliegende LAN-Overlay-Netze realisiert werden.

Verschiedene logische IP-Subnetze oder LAN-Segmente können dadurch getrennt werden, daß deren Daten in verschiedenen Kanälen des MPEG-2-Transportstromes übertragen werden. Jedem dieser Subnetze kann eine eigene Paket ID (PID) zugeordnet werden. Damit ergibt sich eine Routing-Funktion und Zuordnung von LAN-Subadressen zu PIDs und eine einfache logische und auch physikalische Seperierung. Wenn ein MPEG-2-System die Inhalte des Transportstromes nach PIDs filtert und routet, wird damit auch ein komplettes Subnetz oder LAN-Segment als solches behandelt und geschlossen weiter übertragen.

In Video-Verteilnetzen für digitale Rundfunksender mit Übertragung der Daten über unterschiedliche HF-Verbindungen kann es aufgrund unterschiedlicher Gestaltung der Sender und Antennen zu verschiedenen Trägerbandbreiten kommen. Dabei bestimmt die kleinste Bandbreite des Gesamtübertragungsweges die Übertragungsrate für die vom Studio zu den Sendern abgehenden Signale. Dadurch entstehen in manchen Abschnitten mit gegenüber dieser kleinsten Übertragungsrate vergleichbar großen Trägerbrandbreite freie Kapazitäten, die zusätzlich für die Datenübertragung der lokalen Datennetze ausgenutzt werden können, indem in solchen Abschnitten des Gesamtübertragungsweges mit freien Kapazitäten die Übertragungsrate entsprechend erhöht wird. Dazu ist es nur erforderlich, diesen Abschnitten mit freien Kapazitäten entsprechende Data Access Points zuzuordnen, über welche die Datenrate in diesen Abschnitten bis zum technisch maximal möglichen Wert erhöht wird.

## Patentansprüche

1. System zur Übertragung von Daten zwischen lokalen Datennetzen (LAN),
**dadurch gekennzeichnet,**
**daß** die lokalen Datennetze (LAN) über ein bereits bestehendes digitales Video-Verteilnetz (STL) miteinander verbunden sind und für die Datenübertragung die freie Übertragungskapazität des digitalen Video-Verteilnetzes benutzt wird.

2. System nach Anspruch 1,
**dadurch gekennzeichnet,**
**daß** das digitale Video-Verteilnetz (STL) nach dem MPEG-2-Standard programmiert ist und auch die Daten zwischen den lokalen Datennetzen (LAN) als MPEG-2-Transportstrom übertragen werden.

3. System nach Anspruch 1 oder 2,
**dadurch gekennzeichnet,**
**daß** als digitales Video-Verteilnetz eine für die Verteilung der Video- und Audio-Daten von Studios zu digitalen Rundfunk-Sendern dienende Netzstruktur benutzt wird.

4. System nach einem der vorhergehenden Ansprüche,
**dadurch gekennzeichnet,**
**daß** freie Null-Pakete und/oder ungenutzte Stuffing-Bytes und/oder vorhandene PID-basierende Datenkanäle des digitalen Video-Verteilnetzes zur Datenübertragung benutzt werden.

5. System nach einem der vorhergehenden Ansprüche,
**dadurch gekennzeichnet,**
**daß** die Daten der lokalen Datennetze (LAN) über Data Access Points (P), die an beliebigen Punkten des digitalen Video-Verteilnetzes in dieses integriert sind, in das Video-Verteilnetz ein- und ausgekoppelt werden.

6. System nach einem der vorhergehenden Ansprüche,
**dadurch gekennzeichnet,**
**daß** das digitale Video-Verteilnetz unidirektional ist und die Datenübertragung in Vorwärtsrichtung über dieses Video-Verteilnetz erfolgt, während die Datenübertragung in Rückwärtsrichtung über einen gesonderten MPEG-2-basierten Rückkanal erfolgt.

7. System nach Anspruch 6,
**dadurch gekennzeichnet,**
**daß** als Rückkanal eine vorhandene Telekommunikationsverbindung und/oder eine vorhandene Monitor-Link benutzt wird.

8. System nach einem der vorhergehenden Ansprüche,
**dadurch gekennzeichnet,**
**daß** in Kette hintereinander mehrere Data Access Points (P1 bis P3) längs des unidirektionalen digitalen Video-Verteilnetzes (STL) angeordnet sind und vom letzten Data Access Point (P3) dieser Kette ein Rückkanal (ML) zum ersten Data Access Point (P1) der Kette vorgesehen ist, wobei ein Teil der maximal nutzbaren Übertragungskapazität des digitalen Video-Verteilnetzes für die Hinverbindung und ein weiterer Teil der maximalen nutzbaren Übertragungskapazität für die Rückverbindung der lokalen Datennetze (LAN) benutzt wird.

9. System nach einem der vorhergehenden Ansprüche,
**dadurch gekennzeichnet,**
**daß** die Data Access Points (P) für eine unidirektionale Verbindung jeweils Ein- und Ausgangs-Interfaces (1, 2) für das Ein- und Auskoppeln der digitalen Video-Daten des Video-Verteilnetzes (STL), ein Interface (4) für die Verbindung mit dem lokalen Datennetz (LAN), ferner eine Einrichtung (3) zum Einfügen oder Auskoppeln von Daten in das Video-Verteilnetz (STL) und eine Einrichtung (5) zur Bestimmung des Datentransportweges zum nächsten Data Access Point (P) aufweisen.

10. System nach Anspruch 9,
**dadurch gekennzeichnet,**
**daß** für einen bidirektionalen Data Access Point diese Einrichtungen doppelt vorhanden sind.

11. System nach einem der vorhergehenden Ansprüche,
**dadurch gekennzeichnet,**
**daß** die Daten von logischen IP- und/oder LAN-Subnetzen jeweils über getrennte Datenkanäle des digitalen Video-Verteilnetzes (STL) übertragen werden und jedem Subnetz eine eigene Identifikationsnummer (PID) zugeordnet ist.

12. System nach einem der vorhergehenden Ansprüche,
**dadurch gekennzeichnet,**
**daß** bei einem Video-Verteilnetz mit aufeinanderfolgenden Netzabschnitten von unterschiedlicher Übertragungsbandbreite in denjenigen Netzabschnitten mit nicht voll ausgenutzter Übertragungskapazität die Daten der lokalen Datennetze mittels entsprechender Data Access Points mit einer die volle Bandbreite dieser Netzabschnitte ausnutzenden erhöhten Übertragungsrate übertragen werden.
